(19) Europäisches Patentamt
European Patent Office
Office européen des brevets

(11) **EP 3 690 101 B1**

(12) **EUROPEAN PATENT SPECIFICATION**

(45) Date of publication and mention
of the grant of the patent:
**03.04.2024  Bulletin 2024/14**

(21) Application number: **20154839.3**

(22) Date of filing: **31.01.2020**

(51) International Patent Classification (IPC):
*D06F 33/48* <sup>(2020.01)</sup>    *D06F 103/04* <sup>(2020.01)</sup>
*D06F 103/24* <sup>(2020.01)</sup>    *D06F 103/26* <sup>(2020.01)</sup>
*D06F 105/00* <sup>(2020.01)</sup>

(52) Cooperative Patent Classification (CPC):
**D06F 33/48;** D06F 34/16; D06F 2103/04;
D06F 2103/24; D06F 2103/26; D06F 2105/00

(54) **WASHING MACHINE AND METHOD FOR CONTROLLING THE SAME**

WASCHMASCHINE UND VERFAHREN ZUR STEUERUNG DAVON

LAVE-LINGE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2019   KR 20190014061**

(43) Date of publication of application:
**05.08.2020   Bulletin 2020/32**

(73) Proprietor: **LG Electronics Inc.
Yeongdeungpo-gu
Seoul 07336 (KR)**

(72) Inventors:
• **BAE, Suncheol
  08592 Seoul (KR)**
• **KIM, Kyunghoon
  08592 Seoul (KR)**
• **KIM, Junghun
  08592 Seoul (KR)**

(74) Representative: **Vossius & Partner
Patentanwälte Rechtsanwälte mbB
Siebertstrasse 3
81675 München (DE)**

(56) References cited:
**EP-A1- 2 470 709     EP-A2- 2 000 576
US-A- 5 293 760     US-A1- 2009 183 319**

**Description**

The present invention relates to a washing machine and a method for controlling the same, and more particularly, to a washing machine capable of performing artificial intelligence-based machine learning dewatering, and a method for controlling the same.

Generally, a washing machine is a device to remove dirt from laundry (hereinafter also referred to as "fabric") such as clothing, bedding, etc. by using chemical cleaning action of water and a detergent, and physical action such as friction between water and the laundry.

A washing machine is classified into an agitator type, a pulsator type, and a drum type. The drum type washing machine includes a water storage tank (or tub) for storing water and a washing tub (or drum) rotatably disposed in the water storage tank to accommodate laundry therein.

The washing tub (or drum) is formed with a plurality of through holes through which water passes. A washing operation is generally divided into a washing stroke (cycle), a rinsing stroke (cycle) and a dewatering stroke (cycle). A process of each stroke may be displayed through a control panel (or display) provided outside a washing machine.

The washing stroke is to remove dirt from laundry using friction between water stored in the water storage tank and the laundry placed in the washing tub, and chemical cleaning action of a detergent in water.

The rinsing stroke is to rinse the laundry with clean water to remove the detergent soaked (adhered) from it during the washing stroke by supplying clean water (no detergent dissolved) into the water storage tank. A fabric softening agent may be supplied together with the water during the rinsing stroke.

The dewatering stroke is to remove water from the laundry by rotating the washing tub at high speed after the rinsing stroke is finished. Normally, an entire washing operation of the washing machine is finished with an end of the dewatering stroke. However, in the case of a combo washer dryer, a drying stroke may be further added after the dewatering stroke.

Normally, the washing operation is set to operate under a different condition depending on a load or amount of laundry (hereinafter also referred to as "amount of fabrics") placed in the washing tub. For example, a water level, washing strength, a drain time, a dewatering time, etc., may vary according to the amount of laundry.

Meanwhile, washing performance can vary according to not only the amount of the laundry but also a laundry type (fabric type). Therefore, when setting the washing operation only based on the amount of the laundry, sufficient washing performance cannot be obtained.

Korean Patent Application No. 1994-0008628 (Published on September 24, 1994)) discloses the related art washing machine having a configuration for sensing the amount of laundry/fabric type. Specifically, the related art document discloses a technique for detecting the amount of laundry by using an average value of current values, and detecting the fabric type by using a current value deviation.

However, the related art document only focuses on reducing a conventional error in detecting the amount of laundry and fabric type.

In more detail, in the related art document, a configuration for differently setting an allowable UB (unbalance) value, which is a criterion for initializing (interrupting) the dewatering process (stroke), based on the detected amount of laundry and degree of tangled laundry, is not provided.

Accordingly, in the related art document, a more sophisticated control that takes the amount of laundry (laundry amount) and the degree of tangled laundry (laundry-tangled degree) into consideration is not provided.

Meanwhile, in a washing operation, laundry needs to be effectively or evenly loaded (distributed) in the dewatering stroke after the washing and rinsing strokes are finished. If the laundry is not evenly loaded and concentrated on one side, unbalance (UB) is generated, causing the washing tub to shake or vibrate a lot. As a result, a dewatering stroke time becomes longer and noise becomes larger.

Accordingly, in the dewatering stroke, when a UB value, measured by rotation of the washing tub, exceeds a preset allowable UB value, initialization (dewatering process is being stopped for a restart) is performed to evenly load the laundry so as to reduce the UB value. The initialization here may mean re-run the dewatering process in order to restart the dewatering stroke from the beginning (or from a step (section) after detecting a dewatered laundry amount).

However, in the related art washing machine, only a fixed UB table in which the allowable UB value, a criterion for initializing the dewatering process, is set according to the laundry amount. In other words, in the related art washing machine, a fixed allowable UB value is used, which only takes the laundry amount into account without considering the laundry-tangled degree.

In the related art washing machine, since the laundry-tangled degree is not considered, the allowable UB value is set somewhat larger in order to complete dewatering within a reasonable time even in the case of laundry with a high degree of tangling.

In general, unbalance is large in the case of laundry having a high degree of tangling (clothes that get easily tangled), and unbalance is small in the case of laundry having a low degree of tangling (clothes are not tangled easily)

At this time, the laundry having a low degree of tangling enters a high-speed dewatering process without proper laundry balancing (laundry diffusion) since the allowable UB value is set to be large in the related art. In this case, noise is generated as the high-speed dewatering process is performed for the laundry having a low degree of tangling in a state the laundry balancing is not properly performed.

Meanwhile, interest in machine learning, artificial intelligence, and deep learning has greatly increased recently.

The conventional machine learning is focused on statisticsbased classification, regression, and cluster models. In particular, in supervised learning of the classification and regression models, the learning models that distinguish new data from characteristics of learning data based on these characteristics are defined by a person in advance. Deep learning, on the other hand, is one in which a computer searches for and identifies its own characteristics.

One of the factors that accelerated development of the deep learning is deep learning frameworks provided as an open source. Theano of the University of Montreal, Canada, Torch of New York University, Caffe of the University of California, Berkeley, and TensorFlow of Google are the examples of the deep learning frameworks.

With the release of deep learning frameworks, in addition to deep learning algorithms, extraction and selection of data used for a learning process, a learning method, and learning are becoming more important for effective learning and recognition.

Also, research is being actively conducted for applying artificial intelligence and machine learning to various products and services.

In addition, development in employing artificial intelligence and machine learning in a dewatering stoke is being actively carried out in order to perform an optimized dewatering stroke.

US 5 293 760 A discloses a washing machine having an entanglement detector.

EP 2 470 709 A0 discloses a control method of a laundry machine, the method including a vibration sensing step, transient region passing identifying step and a drum rotation speed controlling step configured to control the rotation speed of the drum based on whether the rotation speed of the drum passes a transient region.

Therefore, an aspect of the present invention is to provide a washing machine capable of setting an optimized UB value for a dewatering stroke according to a laundry amount and a laundry-tangled degree, and a method for controlling the same.

Another aspect of the present invention is to provide a washing machine capable of minimizing dewatering noise by determining whether to interrupt a dewatering stroke based on an allowable UB value associated with a laundry amount and laundry-tangled degree, and a method for controlling the same.

Still another aspect of the present invention is to provide a washing machine capable of reducing a dewatering time by applying a different allowable UB value depending on a measured laundry amount and laundry-tangled degree, and a method for controlling the same.

Still another aspect of the present invention is to provide a washing machine capable of providing a more precise dewatering control by determining whether to initialize a dewatering stroke based on an allowable UB value associated with a measured laundry amount and laundry-tangled degree using a UB table classified into a plurality of laundry-tangled degrees according to each laundry amount, and a method for controlling the same.

The tasks to be solved in the present invention may not be limited to the aforementioned, and other problems to be solved by the present invention will be obviously understood by a person skilled in the art based on the following description.

The invention is defined by the independent claims. The dependent claims specify embodiments of the invention.

In order to achieve the aspects of the present invention, there is provided a washing machine according to independent claim 1.

In an embodiment of the present invention, the controller may differently apply the preset allowable UB value, which is a criterion for stopping the rotation of the washing tub during the dewatering stroke, based on the determined laundry amount and laundry-tangled degree.

In an embodiment of the present invention, the controller may measure the plurality of types of data while the washing tub is rotated at the specific rotational speed so that the laundry is lifted up to a predetermined height and then dropped in a rinsing stroke performed before the dewatering stroke.

According to the present invention, the controller is configured to input the measured plurality of types of data as an input value of a pre-learned Artificial Neural Network (ANN) to output the laundry-tangled degree as a result value.

According to the present invention, the controller is configured to determine any one laundry-tangled degrees classified into a plurality of steps through the pre-learned ANN.

In an embodiment of the present invention, the controller may set the preset allowable UB value to a first value when the laundry-tangled degree is determined as a first step, and set the preset allowable UB value to a second value, which is larger than the first value, when the laundry-tangled degree is determined as a second step, which is higher than the first step.

In an embodiment of the present invention, the controller may set the preset allowable UB value based on a UB table that includes information of an allowable UB value set for each laundry-tangled degree classified into a plurality of steps for each laundry amount.

In an embodiment of the present invention, the UB table may include a plurality of laundry-tangled degrees for each laundry amount, and an allowable UB value may be set in advance for each dewatering section according to the plurality of tangled-laundry degrees.

In an embodiment of the present invention, the controller may determine an allowable UB value associated with a laundry amount, and a laundry-tangled degree output through a pre-learned ANN, based on the UB table, and initialize the dewatering stroke when a UB value, generated in response to the rotation of the washing tub for each dewatering section, exceeds the allowable UB value associated with the determined laundry amount and laundry-tangled degree.

In order to achieve the aspects of the present invention, there is also provided a method according to independent claim 7.

In an embodiment of the present invention, the setting step may be configured to differently apply the preset allowable UB value as the criterion for stopping the rotation of a washing tub in the dewatering stroke, based on the determined laundry amount and laundry-tangled degree.

In an embodiment of the present invention, the measuring step may be configured to measure the plurality of types of data while the washing tub is rotated at the specific rotational speed so that the laundry is lifted up to a predetermined height and then dropped during a rinsing stroke performed before the dewatering stroke.

According to the present invention, the determining step is configured to input the measured plurality of types of data as an input value of a pre-learned Artificial Neural Network (ANN) to output the laundry-tangled degree as a result value.

According to the present invention, the determining step is configured to determine any one of laundry-tangled degrees classified into a plurality of steps through the pre-learned ANN.

In an embodiment of the present invention, the setting step may be configured to set the preset allowable UB value to a first value when the tangled-laundry degree is determined as a first step, and to set the preset allowable UB value to a second value, which is larger than the first value, when the laundry-tangled degree is determined as a second step, which is higher than the first step.

In an embodiment of the present invention, the setting step may be configured to set the preset allowable UB value based on a UB table that includes information of an allowable UB value set for each laundry-tangled degree classified into a plurality of steps for each laundry amount.

In an embodiment of the present invention, the UB table may include a plurality of laundry-tangled degrees classified for each laundry amount, and an allowable UB value is set in advance for each dewatering section according to the plurality of tangled-laundry degrees.

In an embodiment of the present invention, the setting step may be configured to determine an allowable UB value associated with a laundry amount an a laundry-tangled degree output through a pre-learned ANN, based on the UB table, and to initialize the dewatering stroke when a UB value, generated in response to the rotation of the washing tub for each dewatering section, exceeds the allowable UB value associated with the determined laundry amount and laundry-tangled degree.

According to the present invention, one or more of the following effects can be provided.

First, the present invention can provide an AI powered washing machine capable of performing optimized dewatering by setting (changing) an allowable UB value, a criterion for interrupting (initializing) a dewatering process, so as to correspond to an allowable UB value associated with a laundry amount and a laundry-tangled degree. Second, the present invention can provide an optimized washing machine capable of reducing a dewatering time by changing an allowable UB value based on a laundry-tangled degree even in the same amount of laundry each time a dewatering process is performed. Thus, in the case of laundry having a low degree of tangling, an allowable UB value is set to be small so as to reduce noise generated during dewatering, and in the case of laundry having a high degree of tangling, an allowable UB value is set to be large so as to reduce a dewatering time, and a method for controlling the same.

Third, the present invention can provide a washing machine capable of performing sophisticated dewatering control by setting an allowable UB value differently according to a laundry-tangled degree as well as a laundry amount by using a UB table classified into a plurality of laundry-tangled degrees according to each laundry amount, and a method for controlling the same.

The effects of the present invention are not limited to those effects mentioned above, and other effects not mentioned may be clearly understood by those skilled in the art from the description of the appended claims.

BRIEF DESCRIPTION OF THE DRAWINGS

FIG. 1 is a lateral sectional view of a washing machine in accordance with one embodiment of the present invention.
FIG. 2 is a block diagram illustrating a control relationship between main components of a washing machine of FIG 1.

FIG. 3 is a flowchart illustrating a representative control method according to the present invention.

FIG. 4 is a flowchart illustrating a detailed control method of FIG. 3.

FIGS. 5, 6, and 7 are conceptual views illustrating a control method of FIGS. 3 and 4.

DETAILED DESCRIPTION OF THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

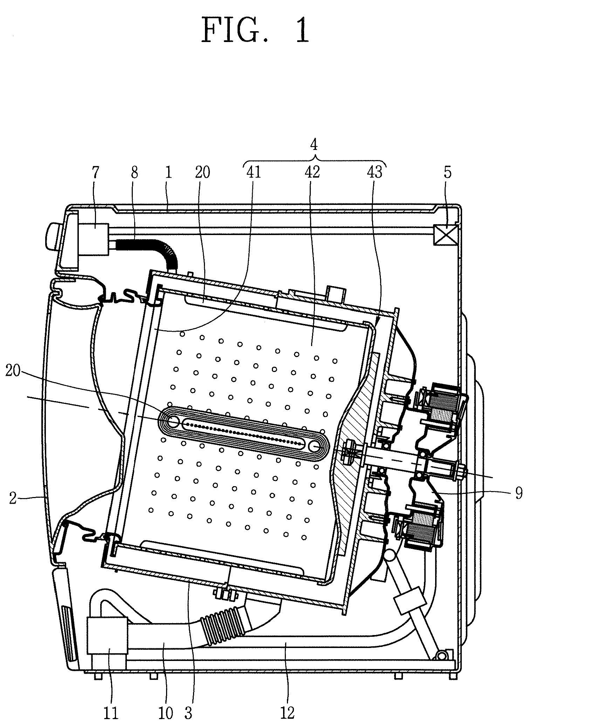

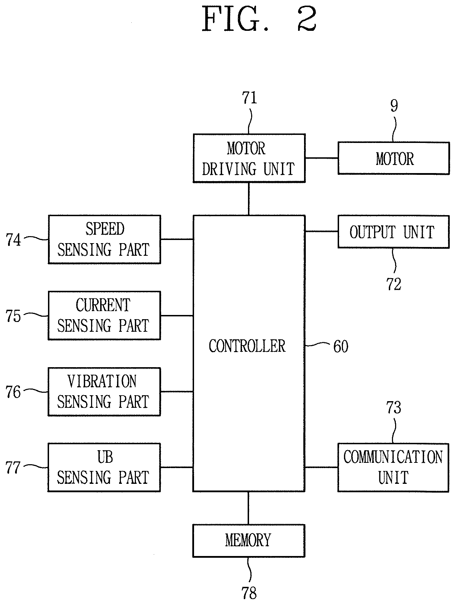

FIG. 1 is a lateral sectional view of a washing machine according to one embodiment of the present invention, and FIG. 2 is a block diagram illustrating a control relationship between main components of a washing machine of FIG 1.

Referring to FIG. 1, a washing machine according to one embodiment of the present invention includes a casing 1 forming an outer appearance, a water storage tank (or tub) 3 disposed in the casing 1 and configured to store wash water therein, a washing tub 4 rotatably disposed in the water storage tank 3 into which laundry is introduced, and a motor 9 configured to rotate the washing tub 4.

The washing tub 4 is provided with a front cover 41 having an opening for putting in and taking out of laundry, a cylindrical drum 42 substantially horizontally disposed so that a front end thereof is coupled to the front cover 41, and a rear cover 43 coupled to a rear end of the drum 42. A rotation shaft of the motor 9 may be connected to the rear cover 43 by passing through a rear wall of the water storage tank 3. A plurality of through holes may be formed in the drum 42 so that water is exchanged between the washing tub 4 and the water storage tank 3.

A lifter 20 may be provided on an inner circumferential surface of the drum 42. The lifter 20 protruding from the inner circumferential surface of the drum 42 extends long to a length direction (a forward-backward direction) of the drum 42, and a plurality of the lifters 20 may be disposed in a circumferential direction with some spacing therebetween. Laundry may be lifted up by the lifter 20 when the washing tub 4 is rotated.

It is not limited to this, but a preferable height of the lifter 20 protruding from the drum 42 may be 30 mm or less (or 6.0% of a drum diameter), and more preferably 10 to 20 mm. Particularly, when the height of the lifter 20 is 20 mm or less, even if the washing tub 4 is continuously rotated in one direction at approximately 80 rpm, laundry may be moved without being attached to the washing tub 4. That is, when the washing tub 4 rotates in one direction more than once, the laundry located at the lowermost position in the washing tub 4 may be lifted up to a predetermined height by the rotation of the washing tub 4 and then dropped while being separated from the washing tub 4.

The washing tub 4 rotates centered on a horizontal axis. Here, the term "horizontal" does not mean geometric horizontal in the strict sense, but it is close to horizontal rather than vertical even when it is inclined at a predetermined angle with respect to the horizontal axis as shown in FIG. 1. Thus, it is assumed that the washing tub rotates with respect to the horizontal axis.

A laundry inlet is formed at a front surface of the casing 1, and a door 2 for opening and closing the laundry inlet is rotatably provided in the casing 1. A water inlet valve 5, a water inlet pipe 6, and a water inlet hose 8 may be installed in the casing 1. When the water inlet valve 5 is opened for supplying water, wash water having passed through the water inlet pipe 6 may be mixed with a detergent in a dispenser 7 and then introduced into the water storage tank 3 through the water inlet hose 8.

An input port of a pump 11 is connected to the water storage tank 3 through a drain hose 10, and an outlet port of the pump 11 is connected to the drain pipe 12. The water discharged from the water storage tank 3 through the drain hose 10 is fed by the pump 11 to flow along the drain pipe 12, and is then discharged to the outside of the washing machine.

Referring to FIG. 2, a washing machine according to one embodiment of the present invention may include a controller 60 configured to control the entire operation of the washing machine, a motor driving unit 71 controlled by the controller 60, an output unit 72, a communication unit 73, a speed sensing part 74, a current sensing part 75, a vibration sensing part 76, a UB sensing part 77, and a memory 78.

The controller 60 may control a series of washing processes of washing, rinsing, dewatering, and drying. The controller 60 may perform washing, rinsing, dewatering, and drying according to a preset algorithm, and also control the motor driving unit 71 according to the algorithm.

The motor driving unit 71 may control driving of the motor 9 in response to a control signal applied by the controller 60. The control signal may be a signal for controlling a target speed of the motor 9, an acceleration tilt (or acceleration), a driving time, and the like.

The motor driving unit 71 is for powering the motor 9, which may include an inverter (not shown) and an inverter controller (not shown). In addition, the motor driving unit 71 may further include a converter or the like used for supplying direct current (DC) power to the inverter.

For example, when the inverter controller (not shown) outputs a switching control signal of a Pulse Width Modulation (PWM) method to the inverter (not shown), then the inverter (not shown) performs high switching so as to supply alternating current (AC) power of a predetermined frequency to the motor 9.

In this specification, controlling the motor 9 in a specific manner by the controller 60 may mean that the controller 60 applies a control signal to the motor driving unit 71 so that the motor driving unit 71 controls the motor 9 in a specific manner based on the control signal. Here, the specific manner may include various embodiments described herein.

The speed sensing part 74 detects a rotational speed of the washing tub 4. The speed sensing part 74 may detect rotational speed of a rotor of the motor 9. When a planetary gear train that rotates the washing tub 4 by changing a revolution ratio of the motor 9 is provided, the rotational speed of the washing tub 4 may be a value converted to the rotational speed of the rotor sensed by the speed sensing part 74 in consideration of a deceleration or acceleration ratio of the planetary gear train.

The controller 60 may control the motor driving unit 71 so that the motor 9 follows a preset target speed by giving feedback on a rotational speed of the washing tub received from the speed sensing part 74. In other words, the controller 60 may control the motor 9 so that the rotational speed of the washing tub reaches the target speed.

The current sensing part 75 detects an electric current applied to the motor 9 (or output current flowing to the motor 9) to transmit the sensed current to the controller 60. The controller 60 may detect the laundry amount and laundry-tangled degree using the received current.

At this time, values of the current include values obtained in a process in which the washing tub 4 is accelerated toward the target speed (or a process in which the motor 9 is accelerated toward the preset target speed).

When rotation of the motor 9 is controlled by vector control based on a torque current and a magnetic flux current, the current may be a torque axis (q-axis) component flowing to a motor circuit, namely, a torque current (Iq).

The vibration sensing part 76 detects vibration in the water storage tank 3 (or a washing machine) generated by rotation of the washing tub 4 in which laundry is accommodated.

A washing machine according to one embodiment of the present invention may include a vibration sensor (or a vibration measurement sensor). The vibration sensor may be provided at one point in the washing machine, e.g., at one point of the water storage tank 3. Alternatively, the vibration sensor may be provided in the vibration sensing part 76.

The vibration sensing part 76 may receive a vibration value (or a vibration signal) measured by the vibration sensor to transmit the vibration value to the controller 60. The vibration sensing part 76 may also calculate a vibration value (or intensity of vibration) of the water storage tank 3 (or washing machine) using the vibration signal measured by the vibration sensor.

Meanwhile, the present invention may further include a UB sensing part 77. The UB sensing part 77 may detect an amount of eccentricity (an amount of shaking) of the washing tub 4, that is, unbalance (UB) of the washing tub 4. The UB sensing part 77 may calculate a UB value that numerically indicates shaking of the washing tub 4.

The UB sensing part 77 will be described later in more detail.

The speed sensing part 74, current sensing part 75, vibration sensing part 76, and UB sensing part 77 provided in the washing machine according to the present invention may also be referred to as a 'sensing unit', and be understood as a concept included in the sensing unit.

In addition, the sensing unit may measure (calculate) a plurality of types of data including at least one of the rotational speed value (or speed value) of the washing tub 4 measured by the speed sensing part 74, the current value applied to the motor 9, which is measured by the current sensing part 75, the vibration value of the water storage tank 3 measured by the sensing unit 76, and the shaking value (UB value) of the washing tub 4 measured by the UB sensing part 77.

The plurality of types of data may mean data related to unbalance (UB) of the washing tub 4, data for measuring UB of the washing tub 4, data obtained by rotation of the washing tub 4, and the like. The plurality of types of data may be used to control the washing tub 4 during the dewatering stroke.

For example, the plurality of types of data may be input as an input value of an artificial neural network learned through machine learning to calculate the laundry-tangled degree as an output value.

Meanwhile, in the drawing, the speed sensing part 74, the current sensing part 75, the vibration sensing part 76, and the UB sensing part 77 are separately provided from the controller 60, but the present invention is not limited thereto.

At least one of the speed sensing part 74, the current sensing part 75, the vibration sensing part 76, and the UB sensing part 77 may be provided in the controller 60. In this case, functions/operation/control methods performed by the speed sensing part 74, the current sensing part 75, the vibration sensing part 76, and the UB sensing part 77 may be performed by the controller 60.

It will be understood that when the vibration sensing part 76 is included in the controller 60 or is performed by the controller 60, the vibration sensor is separately provided at one point of the washing machine, not included in the vibration sensing part 76.

The controller 60 may include a learning module for laundry amount/laundry-tangled degree (not shown), and a recognition module for a laundry amount/laundry-tangled degree (not shown). The learning module for the laundry amount/laundry-tangled degree uses at least one of the plurality of types of data detected by the speed sensing part 74, the current sensing part 75, the vibration sensing part 76, and the UB sensing part 77 for machine learning. Through this machine learning, the learning module for laundry amount/laundry-tangled degree may update a pre-learned artificial neural network stored in the memory 78.

A learning method of the learning module for laundry amount/laundry-tangled degree (not shown) may include at least one of unsupervised learning and supervised learning.

The recognition module (not shown) for laundry amount/laundry-tangled degree may determine a level of the laundry amount and a level of the laundry-tangled degree based on data (or ANN) learned by the learning module for the laundry amount/laundry-tangled degree.

Determining the laundry amount may be a task of classifying the laundry placed in the washing tub 4 into a plurality of preset levels according to weight (load).

Determining the laundry-tangled degree may be a task of classifying the laundry placed in the washing tub 4 into a plurality of preset levels (or steps, classes) according to a degree of tangling.

The recognition module laundry amount/laundry-tangled degree may determine a level of laundry amount and a class of laundry-tangled degree (that is, a laundry-tangled degree according to a laundry amount) for the laundry placed in the washing tub 4 based on the plurality of types of data obtained from at least one of the speed sensing part 74, the current sensing part 75, the vibration sensing part 76, and the UB sensing part 77.

The above-described learning module and recognition module for laundry amount/laundry-tangled degree and recognition module for laundry amount/laundry-tangled degree may be independent components, and be included in the controller 60.

Also, functions/operation/control methods performed by the learning module for laundry amount/laundry-tangled degree and recognition module for laundry amount/laundry-tangled degree may be performed by the controller 60. Hereinafter, for convenience of explanation, description will be given under assumption that the controller 60 performs the functions/operation/control methods of the learning module for laundry amount/laundry-tangled degree and recognition module for laundry amount/laundry-tangled degree.

The output unit 72 may output various information related to a washing machine. For example, the output unit 72 outputs an operating state of the washing machine. The output unit 72 may be an image output device for outputting a visual display such as an LCD or LED, or an acoustic output device for outputting sound such as a buzzer. The output unit 72, controlled by the controller 60, may output information of the laundry amount or the laundry-tangled degree.

A programmed ANN, a current pattern according to a laundry amount and/or a laundry-tangled degree, a database (DB) constructed by machine learning based on the current pattern, a machine learning algorithm, current values detected by the current sensing part 75, average values of the detected current values, values obtained by processing the average values according to a parsing rule, and data transmitted and received through the communication unit 73, and the like may be saved in the memory 78.

In addition, data such as all sorts of control data for controlling the entire operation of the washing machine, data of washing settings input by the user, data of wash time calculated according to the washing settings, data of wash courses, data for determining a washing machine error, and the like may be saved in the memory 78.

The communication unit 73 may communicate with a server connected to a network. The communication unit 73 may include at least one communication module such as an Internet module, a mobile communication module, etc. The communication unit 73 may receive various types of data such as learning data and algorithm updates from the server.

The controller 60 may update the memory 78 by processing various types of data received through the communication unit 73. For example, in case data input through the communication unit 73 is related to an operation program update, which is prestored in the memory 78, the controller 60 may update the memory 78 using the update data. When the input data is about a new operation program, the controller 60 may additionally save the new operation program in the memory 78.

Machine learning means that a computer learns from data and solves a problem without being explicitly instructed logic by a person.

Deep learning is an artificial intelligence technology, which is based on an ANN for constructing artificial intelligence so that a computer thinks and learns like people without having to teach it. The ANN may be implemented in a software form or in a hardware form such as a chip.

For example, a washing machine, based on the machine learning, may figure out properties of the laundry (fabric) (hereinafter, referred to as properties of fabric) introduced into the washing tub 4 by processing current values sensed by the current sensing part 75.

These properties of fabric may include the laundry amount, laundry-tangled degree, and fabric type.

The controller 60 may determine the laundry-tangled degree according to the laundry amount based on machine learning. For example, the controller 60 may measure the laundry amount to determine one category among the pre-classified categories based on the laundry-tangled degree. The laundry-tangled degree represents a degree to which the laundry (fabric) items placed in the washing tub 4 are tangled (or twisted) with each other and an extent to which one laundry (fabric) item is evenly loaded, or tangled, which may be classified into the preset laundry-tangled levels (steps).

For example, the lower the degree of tangled laundry, the less the laundry is tangled (that is laundry is slightly tangled), and the higher the degree of tangled laundry, the more the laundry is tangled (that is, laundry is severely tangled).

Such a laundry-tangled degree may be variously defined or classified according to various types of laundry (fabric texture) in the washing tub 4, and may vary depending on a combination and properties of various types of the laundry. In case, the laundry type is the same, the laundry-tangled degree may be determined or varied depending on its material, moisture content, volume difference, and laundry type.

The laundry-tangled degree may be understood as a different concept from the fabric type defined based on various factors such as a fabric material, a degree of softness (e.g., soft/hard fabric), ability of the fabric to contain water (moisture content), a volume difference between dry fabric and wet fabric. The controller 60 may detect the laundry amount by using a current value, which is currently detected by the current sensing part 75, as input data of the ANN pre-learned by machine learning until the target speed is reached.

In addition, the controller 60 may determine (predict, estimate, calculate) various information related to unbalance of the washing tub 4 according to the present invention using the ANN learned through machine learning.

For example, the controller 60 may sort (determine) the laundry-tangled degree by inputting the plurality of types of data as an input value of the ANN. Thereafter, the controller 60 may change the allowable UB value, a criterion for interrupting (initializing) the dewatering process based on the determined laundry-tangled degree.

Hereinafter, the UB sensing part 77 for measuring unbalance of the washing tub 4 according to the present invention will be described in more detail.

The UB sensing part 77 may measure unbalance of the washing tub 4 generated when the washing tub 4 in which laundry is accommodated rotates. Here, unbalance of the washing tub 4 may mean shaking of the washing tub 4 or a shaking value (or a degree of shaking) of the washing tub 4.

The UB sensing part 77 may measure (calculate) the shaking value (or degree of shaking) of the washing tub 4 (or drum). Here, the shaking value of the washing tub 4 may be named as a UB value, a UB amount, an unbalance value, an unbalance amount, or an eccentricity amount.

In this specification, unbalance (UB) may mean the amount of eccentricity of the washing tub 4, that is, unbalance of the washing tub 4 or shaking of the washing tub 4, which may be caused by uneven arrangement or distribution of the laundry.

The UB value is for indicating an intensity (or a degree) of shaking of the washing tub, which may be calculated (computed) based on the amount of rotational speed variations of the washing tub 4 (or motor 9), or the amount of acceleration variations of the washing tub 4 (or the motor 9).

For example, the UB sensing part 77 may calculate the UB value by receiving the rotational speed of the washing tub 4 (or motor 9) measured by the speed sensing part 74 and using the amount of variations in the received rotational speed. Here, the amount of rotational speed variations may mean, for example, a difference in rotational speed measured at predetermined time intervals, a difference in rotational speed measured at each time when the washing tub 4 is rotated by a predetermined angle, or a difference between the maximum rotational speed and the minimum rotational speed.

For example, the UB sensing part 77 may measure the rotational speed of the washing tub 4, measured by the speed sensing part 74, at each predetermined angle to calculate the UB value through a difference in the measured rotational speed. Thereafter, the UB sensing part 77 may calculate the UB value by using a value obtained by subtracting the minimum rotational speed from the maximum rotational speed in the measured rotational speed values.

As another example, the UB sensing part 77 may calculate the UB value (UB (k)) based on the formulae 1 to 3 below by using rotational speed (e.g., rotational speed (RPM) at every 30 degrees) values measured at predetermined angles.

[Formula 1]

$$a_k = (v_k + v_{k-1} + \ldots + v_{k-5}) - (v_{k-6} + v_{k-7} + \ldots + v_{k-11})$$

[Formula 2]

$$v_k = v_{k+12}$$

[Formula 3]

$$UB(k) = \max(a_k, a_{k-1}, \ldots, a_{k-11}) - \min(a_k, a_{k-1}, \ldots, a_{k-11})$$

The $v\_k$ to $v\_(k-11)$ denotes rotational speed measured at each predetermined angle (30 degrees), and k is an integer.

Accordingly, the UB value becomes larger as shaking (or vibration) of the washing tub 4 during the rotation of the washing tub is increased due to uneven arrangement (unbalance) of the laundry in the washing tub 4.

As another example, the UB value may mean a predetermined value proportional to the amount of rotational speed variations (a value obtained by subtracting the minimum rotational speed from the maximum rotational speed).

The UB value may be calculated based on the rotational speed of the washing tub, a current value applied to the motor, or a vibration value of the water storage tank 3 measured by the vibration sensor.

As such, the UB value may be defined as various values measured by unbalance of the washing tub 4. In this specification, it is assumed that the UB value is defined based on rotational speed (RPM) fluctuations of the washing tub 4 detected when the washing tub 4 rotates.

For example, in case laundry is placed to be concentrated in one side of the washing tub 4 or laundry is severely tangled, unbalance is increased (that is, unbalance becomes severe), causing the washing tub to shake or vibrate a lot while rotating. And the UB value becomes larger accordingly.

As the washing tub shaking becomes severe (as the UB value of the washing tub becomes larger), a large current load is applied to the motor 9 for rotating the washing tub 4 at high-speed during the dewatering stroke, causing huge energy consumption and noise.

On the other hand, when laundry is evenly distributed in the washing tub 4 or laundry is slightly tangled, unbalance is reduced. Accordingly, even if the washing tub is rotated at high speed, shaking of the washing tub becomes small, and the UB value becomes smaller accordingly.

In a washing machine according to the present invention, a laundry balancing process (laundry diffusion process) may be performed during the dewatering stroke by decreasing the UB value so as to reduce energy consumption and noise.

The laundry balancing process refers to a process for evenly loading the laundry in the washing tub 4 or for untangling the laundry. Unbalance of the washing tub 4 is reduced when the laundry is evenly loaded (distributed) or the tangled laundry gets untangled.

The laundry balancing process may mean a process in which laundry is lifted up by a predetermined height and then dropped in order to evenly load or distribute the laundry. For this reason, the laundry balancing process may be performed during a dewatering section or period (for example, 80 RPM or lower section) in which the laundry is rotated without being attached to the washing tub 4 so as to be lifted up to a predetermined height then fall. As the laundry is lifted up to a predetermined height and then dropped, the tangled laundry gets untangled by impact of the drop. Accordingly, unbalance is reduced as the laundry becomes evenly loaded.

Meanwhile, in an embodiment of the present invention, rotation of the washing tub 4 may be stopped during the dewatering process (dewatering stroke) when a measured (detected) unbalance (UB) value, generated by the rotation of the washing tub, exceeds the preset allowable UB value (that is, when the UB value exceeds the preset allowable UB value).

Exceeding the preset allowable UB value means that shaking of the washing tub 4 is generated more than a reference vibration value as laundry in the washing tub 4 is unevenly distributed. In this case, when rotating the washing tub 4 at a high RPM, noise is generated and a large current load is consumed.

The controller 60 according to the present invention may interrupt (initialize) the dewatering process when the UB value exceeds the preset allowable UB value.

Here, interrupting the dewatering process may mean that the dewatering process is initialized so that the dewatering process is restarted from the beginning (or the dewatering process is started again from a section after detecting a dewatered laundry amount), the rotation of the washing tub 4 is stopped, interrupted, or a combination thereof.

The preset allowable UB value may mean a preset reference value, which is a criterion for stopping rotation of the washing tub (initializing the dewatering process) during the dewatering process.

The preset allowable UB value may also be referred to as an allowable UB value limit, a reference UB value, a set UB value, or the like.

The preset allowable UB value may be set for each dewatering section or period (first to $n^{th}$ sections), as shown in FIG. (a) of 7.

The dewatering section (first to $n^{th}$ sections) is a plurality of sections included in the dewatering process. It may include at least one section among a rotational speed increase section, a rotational speed maintaining section, and a rotational speed reduction section, for example, a section in which rotation of the washing tub 4 is maintained at first speed, a section in which rotation of the washing tub 4 is accelerated to second speed from the first speed, a section in which rotation of the washing tub 4 is maintained at the second speed, a section in which rotation of the washing tub 4 is decelerated to third speed from the second speed, a section in which rotation of the washing tub 4 is maintained at the third speed.

In this specification, it is assumed that the dewatering sections include sections in which the rotational speed of the washing tub gradually increases by repeating maintenance sections and acceleration sections.

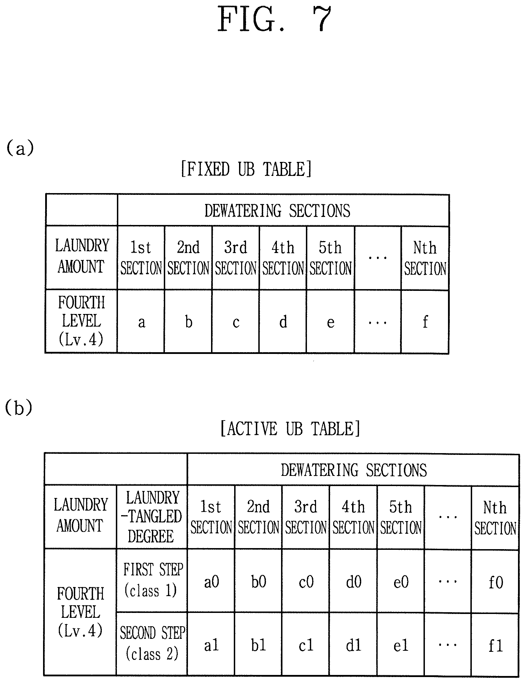

In the related art, as illustrated in (a) of FIG. 7, a fixed allowable UB value set for each laundry amount is used. In other words, only a fixed allowable UB value is used for one laundry-amount level according to each dewatering section regardless of a laundry-tangled degree.

In addition, in the related art, even in the case of laundry having a high degree of tangling, the allowable UB value is set to be somewhat larger in order to satisfy (meet) an entry time for a high-speed dewatering section.

In addition, unbalance may be different even in the same laundry amount when the laundry-tangled degree is different.

Accordingly, even in the case of laundry having a low degree of tangling (in the case of a practical load with good balancing), a fixed allowable UB value is set to be large. As a result, the laundry enters the high-speed dewatering section without being evenly distributed since the fixed allowable UB value is satisfied. In this case, noise or abnormal vibration in the high-speed dewatering section is highly likely to occur.

Hereinafter, a washing machine in accordance with one embodiment of the present invention capable of setting an optimized allowable UB value which takes a laundry amount and laundry-tangled degree into consideration will be described in detail with reference to the accompanying drawings.

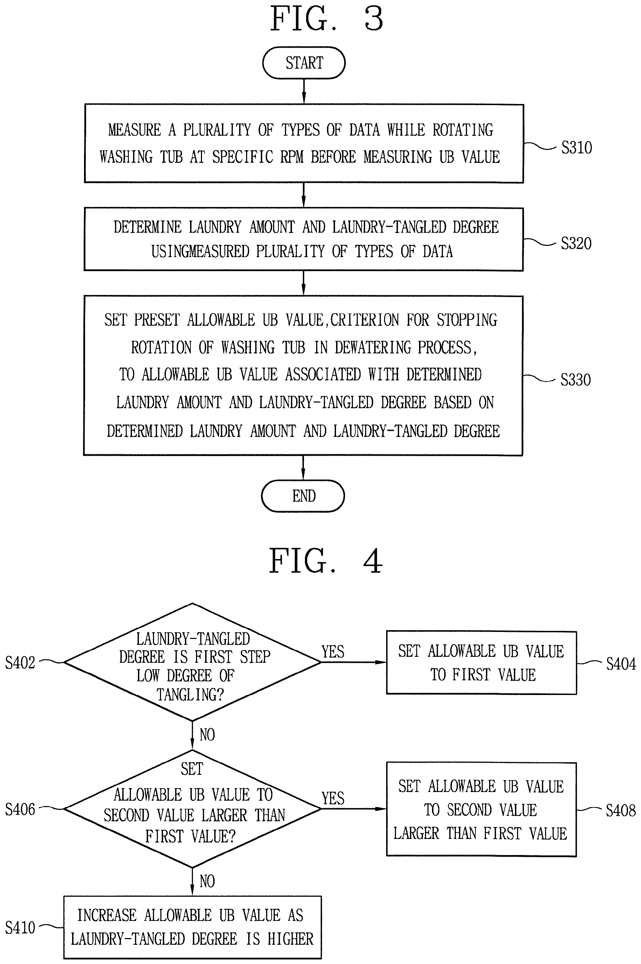

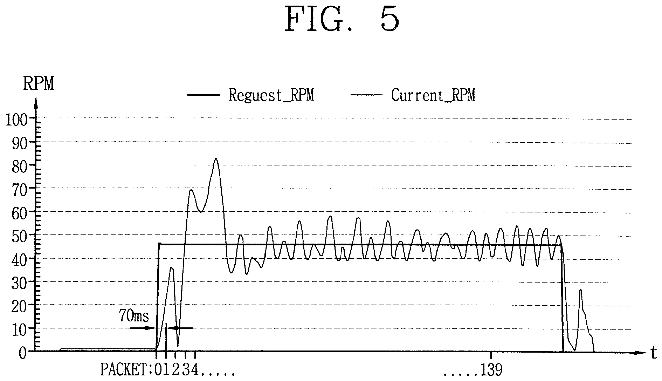

FIG. 3 is a flowchart illustrating a representative control method according to the present invention, and FIG. 4 is a flowchart illustrating a control method of FIG. 3. FIGS. 5, 6, and 7 are conceptual views illustrating a control method of FIGS. 3 and 4.

First of all, the washing machine in accordance with one embodiment of the present invention may include a washing tub 4 configured to accommodate laundry therein, a motor 9 configured to rotate the washing tub, and a controller 60 configured to control the motor to stop rotation of the washing tub when a measured (detected) unbalance (UB) value, generated by the rotation of the washing tub during a dewatering process (dewatering stroke), exceeds a preset allowable UB value (that is, when a UB value exceeds a preset allowable UB value).

Meanwhile, the controller 60 determines the laundry-tangled degree using a plurality of types of data (e.g., before the dewatering stroke or in a rinsing stoke (rinsing process) before measuring the UB value.

In addition, the controller 60 may modify (change) a preset allowable UB value, which is a criterion for interrupting (initializing) the dewatering process (or serving as a criterion for stopping rotation of the washing tub in the dewatering process) based on the determined laundry amount and laundry-tangled degree.

Specifically, the controller 60 may set the preset UB value to an allowable UB value associated with the determined laundry amount and laundry-tangled degree based on the determined laundry amount and laundry-tangled degree.

The washing machine in accordance with one embodiment of the present invention has a technical feature in that the allowable UB value is set by using a more segmented UB table according to the laundry-tangled degree as well as the laundry amount.

In the related art, as shown in FIG. (a) of 7, a fixed UB table is used in which the allowable UB value is only set (linked) according to the laundry amount.

However, in the present invention, as shown in FIG. (b) of 7, a plurality of laundry-tangled degrees is more segmented for each laundry amount, and an active UB table including the allowable UB value that the laundry amount and the laundry-tangled degree are linked together. Accordingly, the allowable UB value, a criterion for initializing (interrupting) the dewatering process, is determined based on the detected laundry-amount and laundry-tangled degree.

In other words, unlike the related art that uses the fixed UB table, the present invention can provide a washing machine capable of setting the allowable UB value which takes the laundry-tangled degree as well as the laundry amount into consideration by using the active UB table, which is further segmented by the laundry-tangled degree according to each laundry amount.

In this specification, changing the preset allowable UB value (or allowable UB value) should be understood that an allowable UB value is applied differently based on the detected laundry-tangled degree, which is different even in the same laundry amount for each dewatering process. That is, it should be noted that changing the preset allowable UB value (or allowable UB value) in this specification does not mean to change the allowable UB value itself associated with a specific laundry amount and laundry-tangled degree.

In this specification, it should be understood that changing the preset allowable UB value is to apply (use, set) a different allowable UB value associated with a differently measured laundry amount and laundry-tangled degree whenever a laundry amount and laundry-tangled degree are measured differently.

Referring to FIG. 3, the controller 60 measures the plurality of types of data while rotating the washing tub at a specific rotational speed before measuring the UB value (before entering the dewatering process, during the rinsing process, or before measuring the UB value during the dewatering process) (S310).

Here, before measuring the UB value may be before entering the dewatering process or during the rinsing process (or rinsing stroke) or before a time point when the UB value included in the dewatering process is measured.

In addition, the specific rotational speed is rotational speed at which a tumbling motion is performed. For example, the specific rotational speed may be somewhere between 40 and 50 RPM.

The tumbling motion allows the motor 9 to rotate the washing tub 4 in one direction so that laundry placed in an inner surface of the drum 42 is controlled to drop to the lowest point of the drum 42 at a position of about 90 to 110 degrees in a rotational direction of the washing tub 4. In the tumbling motion, the motor 9 rotates the washing tub 4 in one direction, and when the laundry rotates clockwise, the laundry moves from the third quadrant of the drum to a part of the second quadrant of the drum, and drops to the lowest point, and is then lifted up again to fall. Such series are repeated.

The controller 60 may measure the plurality of types of data while rotating the washing tub at the specific rotational speed (for example, 46 RPM) so that laundry is lifted up by a predetermined height and then dropped during the rinsing process performed before the dewatering process.

In other words, the controller 60 may measure the plurality of types of data while rotating the washing tub 4 at the specific rotational speed so as to perform the tumbling motion during the rinsing process.

The plurality of types of data include at least one of current rotational speed (Current RPM), speed UB (or UB value or virtual vibration amount), a q-axis current (Iq), starting/holding currents, information of laundry-amount level, and a vibration value.

The plurality of types of data may be data related to the rotation of the washing tub. For example, the plurality of types of data may be measured (calculated) by at least one of the speed sensing part 74, the current sensing part 75, the vibration sensing part 76, and the UB sensing part 77.

The plurality of types of data may include a current RPM value (or current speed value) of the washing tub 4 measured by the speed sensing part 74, a current value applied to the motor 9 (q-axis current and starting/holding currents) measured by the current sensing part 75, a vibration value of the water storage tank 3 measured by the vibration sensing part 76, and a shaking value (UB value, speed UB) of the washing tub 4 measured by the UB sensing part 77.

The current RPM, as illustrated in FIG. 5, may mean actually measured rotational speed (Current_RPM) of the washing tub 4, not the target rotational speed (Request_RPM).

As illustrated in FIG. 5, although a control signal is applied to the motor driving unit 71 so as to rotate the washing tub 4 at the target rotational speed, unbalance is generated when the laundry is unevenly placed (distributed) in the washing tub 4, causing RPM fluctuations of the washing tub 4.

The current rotational speed (current RPM) may be data obtained by sequentially summing a predetermined number (for example, 10) of rotational speed values measured at predetermined time intervals (for example, 70ms). However, the present invention is not limited to this, and the current RPM may also be an average value of the rotational speed values measured at predetermined time intervals.

The speed UB (UB value) represent data obtained by sequentially summing a predetermined number (for example, 5) of speed UB values measured at predetermined time intervals (for example, 70ms). Similarly, the speed UB is an average value of the UB values (or sum data) measured at predetermined time intervals.

The current RPM and the speed UB may be measured by the speed sensing part 74.

The q-axis current (Iq) represents a torque current (Iq) value (or the sum data of current values measured at each predetermined time intervals or the average value) corresponding to a torque axis (q-axis) component among the currents applied to the motor.

The starting current may mean a current applied to accelerate the washing tub 4 to rotate a specific rotational speed (for example, 46 RPM), and the holding current may mean a current applied to maintain a specific rotational speed after the washing tub 4 reaching it.

The starting/holding currents are generated after a predetermined time period has passed since the start, and may be one representative value. The starting/holding currents may be measured (calculated) based on the measured q-axis current.

The q-axis current and the starting/holding currents may be measured by the current sensing part 75.

In addition, when a vibration sensor is provided in a washing machine, the controller 60 may measure a vibration value of the water storage tank 3. Likewise, the vibration value may mean a vibration displacement value of the water storage tank, and may mean the sum data (or the average value) of the vibration values measured at predetermined time intervals.

In other words, the controller 60 according to the present invention may not only measure data at a specific moment but also use the sum data (or the average value) measured at predetermined time periods as data.

Further, the controller 60 measures a plurality of different types of data, not just use one type of data.

Referring back to FIG. 3, the controller 60 determines the laundry amount and laundry-tangled degree using the plurality of types of data measured (S320).

For detecting the laundry amount, the controller 60 inputs at least one of the plurality types of data (for example, a q-axis current) into the pre-learned ANN through machine learning to output (detect) the laundry amount as an output value.

In addition, the controller 60 determines one level among the plurality of laundry-amount levels using the current value detected by the current sensing part.

A washing machine according to the present invention may detect the laundry amount by applying at least one of the technologies for detecting all types of laundry amounts developed to date. The technology for detecting the laundry amount is a general technology, thus more detailed description thereof will be omitted.

The controller 60 may detect the laundry amount at various points of time. For example, the controller 60 may detect the laundry amount when measurement of the plurality of types of data is completed, or may detect the laundry amount before starting measurement of the plurality of types of data.

Also, the controller 60 may detect the laundry amount before entering the dewatering stroke (process), which is after completely draining water during the rinsing stroke.

In addition, the controller 60 may sense the laundry amount together when detecting (calculating) the laundry-tangled degree.

A point of time for detecting the laundry amount may be set differently and be determined or changed according to user settings.

Meanwhile, the point of time at which the laundry amount and laundry-tangled degree are detected is before the UB value is measured (that is, before the dewatering process, after finishing the rinsing process, or before initially measuring the UB value during the dewatering process, etc.). This is to determine the laundry amount and laundry-tangled degree before the UB value is measured, and to set the preset allowable UB value, which is a comparison target (criterion) for the UB value based on the determined laundry amount and laundry-tangled degree.

The controller 60 inputs the measured plurality of types of data as an input value of a pre-learned ANN to output the laundry-tangled degree as a result value.

Specifically, the controller 60 may determine any one laundry-tangled degree among the plurality of classified steps (for example, a first step (level) (class 1), a second step (level) (class 2), and a third step (level) (class 3).

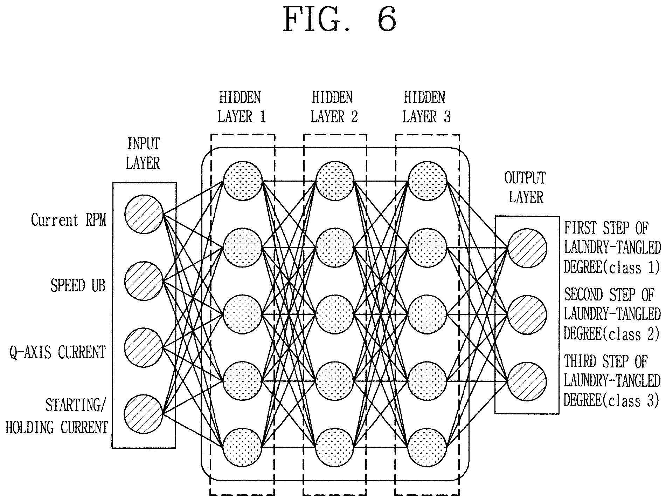

Referring to FIG. 6, the controller 60 determines (detect, judge, and calculate) the laundry-tangled degree by using the plurality of types of data (for example, current RPM, speed UB, q-axis current, starting/holding currents) measured in the rinsing stroke as input data (input data, input layer) of the ANN pre-learned by machine learning.

The controller 60 inputs the measured plurality of types of data as an input value of the pre-learned ANN to output the laundry-tangled degree as a result value.

At this time, the controller 60 may determine any one laundry-tangled degree among the plurality of classified laundry-tangled steps (a first step (class 1), a second step (class 2), a third step (class 3)) through the pre-learned ANN.

Meanwhile, the present invention includes an ANN for calculating the laundry-tangled degree as a result value. Information of the ANN may be prestored in the memory 78 or the controller 60.

FIG. 6 is a schematic view illustrating one example of the ANN.

Deep Learning, a class of machine learning, may mean learning deep down to multi-levels based on data.

Deep learning may represent a set (collection) of machine learning algorithms that extract key data from multiple data by going through hidden layers in order.

A deep learning structure may include an ANN. For example, the deep learning structure may include a Deep Neural Network (DNN) such as a Convolutional Neural Network (CNN), a Recurrent Neural Network (RNN), and a Deep Belief Network (DBN).

Referring to FIG. 6, the ANN may include an input layer, hidden layers, and an output layer. Having multiple hidden layers is referred to as a DNN. Each layer has a plurality of nodes, and each layer is connected to the next layer.

Nodes may be interconnected with weights.

An output from any node belonged to a first hidden layer (Hidden Layer 1) may be input to at least one node belonged to a second hidden layer (Hidden Layer 2). In this case, an input of each node may be a value obtained by applying a weight to a node of the previous layer. The weight may mean link strength between nodes. The deep learning process may be seen as a process of finding a proper weight.

The ANN employed in the washing machine according to one embodiment of the present invention may mean the DNN that is learned through supervised learning using the plurality of types of data (current RPM, speed UB, q-axis current, and starting/holding currents) as input data and the laundry-tangled degree measured by experiments as result data.

The supervised learning may refer to one method of machine learning for deriving a function from training data.

The ANN according to the present invention may be a DNN that hidden layers are learned by experimentally measuring the laundry-tangled degree for each of a plurality of types of data, and inputting each of the plurality of types of data as input data and the laundry-tangled degree measured for each of the plurality of types of data as a result value. Here, learning the hidden layers may mean adjusting (updating) the weights of inter-node connection lines included in the hidden layers.

Using this ANN, the controller 60 according to the present invention may calculate a plurality of types of data at a specific point of time (time point), set the plurality of types of data as an input value of the ANN to determine (predict, extract, calculate, judge, estimate) the laundry-tangled degree.

The controller 60 may perform learning by using the plurality of types of data corresponding to the current RPM, speed UB, q-axis current, and starting/holding currents as training data.

The controller 60 uses a vibration value and laundry amount as additional training data, and use the vibration value and laundry amount as an input value.

In addition, the controller 60 may update a DNN structure such as weight, bias, and the like whenever detecting or determining the laundry-tangled degree by adding the determined results and plurality of types of data input at that time to a database. Also, the controller 60 may update the DNN structure such as weight and the like by performing a supervised learning process using training data after a predetermined number of training data is obtained.

The controller 60 inputs the plurality of types of data as an input value of the pre-learned ANN to output (determine, detect) the laundry-tangled degree as an output value.

Referring back to FIG. 3, the controller 60, based on the determined laundry amount and laundry-tangled degree, may set (change) the preset allowable UB value, a criterion for stopping rotation of the washing tub during the dewatering process (that is, a criterion for interrupting (initializing the dewatering process), to an allowable UB value associated with the determined laundry amount and laundry-tangled degree (S330).

The controller 60 may control the washing tub 4 to stop rotation of the washing tub 4 when the UB value, generated by rotation of the washing tub in the dewatering process, exceeds the preset allowable UB value (e.g., when the detected UB value is larger than the preset allowable UB value). That is, stopping rotation of the washing tub may be to initialize (interrupt) the dewatering process so as to restart or re-run the dewatering process from the beginning (or restart from a section after detecting the laundry amount), or interrupt the rotation of the washing tub 4.

The controller 60 determines the laundry-tangled degree using the plurality of types of data measured while rotating the washing tub 4 at specific rotational speed before entering the dewatering process (or before measuring the UB value), and change the preset allowable UB value based on the determined laundry-tangled degree.

At this time, the laundry-tangled degree may be determined by the plurality of types of data measured while rotating the washing tub 4 at the specific rotational speed during the rinsing process, and the pre-learned ANN through machine learning.

The controller 60 may differently apply the preset allowable UB value, which is a criterion for stopping rotation of the washing tub in the dewatering process, based on the determined laundry amount and laundry-tangled degree.

Hereinafter, it is assumed that the determined laundry level is a fourth level (Level 4).

For example, referring to FIG. 4, the controller 60 may set the preset allowable UB value to a first value (S404) when the laundry-tangled degree is determined as a first step (class 1) (S402).

In addition, when the laundry-tangled degree is determined as a second step (class 2) (S406), which is higher than the first step, the controller 60 may set the preset allowable UB value to a second value, which is larger than the first value (S408).

Further, the controller 60 may increase the preset allowable UB value as the laundry-tangled degree is higher (S410). However, the controller 60 may not increase the allowable UB value above an allowable UB value limit (that is, the controller increases the allowable UB value within the allowable UB value limit).

The first value may be a first allowable UB value associated with the fourth level of laundry amount and the first step (class) of laundry-tangled degree, and the second value may be a second allowable UB value associated with the fourth level of laundry amount and the second step (class) of laundry-tangled degree.

For example, when the laundry-tangled degree determined by the plurality of types of data measured in the rinsing process and the pre-learned ANN is the first step, which is a low degree of tangling, the controller 60 may set (change) the preset allowable UB value to the smaller first value.

In addition, when the determined laundry-tangled degree is the second step (that is, the step greater than the first step), which has a higher degree of tangling, the controller 60 may set (change) the preset allowable UB value to the second value, which is larger than the first value. The controller 60 may use a UB table that includes information (data) of the allowable UB value set for each laundry-tangled degree classified into a plurality of categories so as to set (or change) the preset allowable UB value to a UB value associated with the measured laundry amount and laundry-tangled degree.

The UB table may be prestored in the memory 78 or the controller 60.

The UB table according to one embodiment of the present invention is illustrated in FIG. (b) of 7.

In the related art UB table, as illustrated in FIG. 7A, the allowable UB value is set for each rotational speed section according to each laundry amount. That is, the related art UB table is a fixed UB table classified only by the laundry amount.

However, the UB table according to the present invention, as illustrated in FIG. (b) of 7, a plurality of laundry-tangled degrees may be classified according to each laundry amount, and the allowable UB value of each dewatering section (first to $n^{th}$ sections) may be set according to each laundry-tangled degree.

In other words, the controller 60 may set the preset allowable UB value based on a UB table that includes information of the allowable UB value set for each of the plurality of laundry-tangled steps (classes) according to each laundry amount.

In the UB table, the laundry-tangled degree may be classified into a plurality of laundry-tangled degrees according to each laundry amount, and the allowable UB value may be preset for each dewatering section according to each of the plurality of laundry-tangled degrees.

The controller 60 may change the preset allowable UB value based on the UB table including information of the allowable UB value set for each of the plurality of laundry-tangled degrees. That is, the UB table employed in the present invention may be named as an active UB table.

Referring to FIG. (b) of 7, the UB table includes the plurality of classified laundry-tangled degrees according to each laundry amount, and the allowable UB value may be preset for each dewatering section according to each of the plurality laundry-tangled degrees.

Taking a fourth level (level 4) of the detected laundry amount, and a first section of the dewatering process (for example, a section at which rotation of the washing tub 4 is maintained at 108 RPM) as an example, the allowable UB value may be set to a0 (e.g., a first value) in case the laundry tangled-degree is a first step (class 1) (laundry is slightly tanged), and the allowable UB value may be set to a1, larger than the a0, (e.g., a second value which is larger than the first value), in case the laundry-tangled degree is a second step (class 2) (laundry is severely tangled), which is higher than the first step.

Similarly, the allowable UB value of each rotational speed section (a0, b0, c0, ..., f0) of the first step (class) of the laundry-tangled degree may be smaller than the allowable UB value of each rotational speed section (a1, b1, c1, ..., f1) of a second step (class) of the laundry-tangled degree.

In other words, the allowable UB value of each rotational speed section (a1, b1, c1, ..., f1) of the second laundry-tangled step (class) may be set (linked) larger than the allowable UB value of each rotational speed section (a0, b0, c0, ..., f0) of the first laundry-tangled step (class).

Based on the UB table, the controller 60 may determine the allowable UB value associated with the laundry amount and laundry-tangled degree output through the pre-learned ANN.

Specifically, based on the UB table, the controller 60 may determine the allowable UB value associated with the laundry amount and the laundry-tangled degree output through the pre-learned ANN, and initialize (interrupt) the dewatering process when the UB value, generated by rotation of the washing tub, exceeds the allowable UB value associated with the determined laundry amount and laundry-tangled degree.

For example, when the sensed laundry amount is the fourth level (level 4), and the output laundry-tangled degree is the first step (class 1), the controller 60 may determine whether to stop the rotation of the washing tub (whether to initialize (interrupt) the dewatering process) by comparing the allowable UB value (a0, b0, c0, ..., f0) related to the fourth laundry-amount level and the first laundry-tangled step (class) with the UB value, generated by rotation of the washing tub 4 during the dewatering process.

As another example, when the sensed laundry amount is the forth level (level 4), and the output laundry-tangled degree is the second step (class 2), the controller 60 may set the allowable UB value to the allowable UB value (a1, b1, c1, ..., f1) related to the fourth laundry-amount level and the second laundry-tangled step (class). Thereafter, the controller 60 may determine whether to stop rotation of the washing tub 4 (whether to initialize (interrupt) the dewatering process) by comparing the allowable UB value (a1, b1, c1, ..., f1) related to the second laundry-tangled step with the UB value, generated by rotation of the washing tub 4 during the dewatering process.

Thereafter, the controller may initialize (interrupt) the dewatering process when the UB value of each dewatering section, generated by rotation of the washing tub 4, exceeds the allowable UB value associated with the detected laundry amount and laundry-tangled degree. That is, when the UB value, generated by the rotation of the washing tub 4, exceeds the allowable UB value associated with the detected laundry amount and tangled-laundry degree, the controller 60 stops the rotation of the washing tub 4 to re-run the dewatering process from the beginning (or from a section after detecting a dewatered laundry amount).

If the UB value, generated by rotation of the washing tub 4, is lower than or equal to the allowable UB value associated with the detected laundry amount and laundry-tangled degree, the controller 60 may continue the dewatering process (that is, it may accelerate (increase) rotational speed of the washing tub, or entering the high-speed dewatering section or entering the next dewatering section may be available).

Hereinafter, it is assumed that the laundry amount is one specific laundry amount (e.g., the laundry amount is the fourth level (level 4)) to explain that the allowable UB value is changed depending on the laundry-tangled degree (or a different UB value is applied depending on the laundry-tangled degree even in the same specific laundry amount).

When the laundry-tangled degree is determined as the first step (class 1), the controller 60 may determine whether to stop rotation of the washing tub 4 (that is, whether to initialize (interrupt) the dewatering process) based on the allowable UB value (a0, b0, c0, ..., f0) associated with the first laundry-tangled step (class 1).

For example, rotational speed of dewatering sections may be increased in order from the first section to the $n^{th}$ section. Accordingly, the rotational speed may be the highest in the $n^{th}$ section.

The allowable UB value may gradually increase from a to f. However, the present invention is not limited to this, the allowable UB value may gradually decrease from a to f. This may vary or be determined depending on the user settings.

In case the laundry-tangled degree is determined as the first step (class 1), the controller 60 may stop rotation of the washing tub 4 to initialize the dewatering process when the UB value of the washing tub measured in the first section exceeds the allowable UB value (a0) associated with the first laundry-tangled step (class 1).

In case the laundry-tangled degree is determined as the second step (class 2) (a higher degree of laundry tangling), the controller 60 may stop rotation of the washing tub 4 to initialize the dewatering process when the UB value of the washing tub measured in the first section exceeds the allowable UB value (a1) associated with the second laundry-tangled step (class 2). For example, the first section may be a section at which rotational speed of the washing tub 4 is maintained at 108 RPM.

Here, in case the laundry-tangled degree is determined as the second step (class 2), the controller 60 may continue the dewatering process without stopping rotation of the washing tub 4 when the UB value measured in the first section is smaller than the allowable UB value (a1) associated with the second laundry-tangled degree (class 2), and larger than the allowable UB value (a0) related to the first laundry-tangled degree (class 1).

If it is assumed that the laundry amount is the fourth level (level 4), the allowable UB values related to the first section is a0=50 and a1=100, and the UB value measured in the first section is 75.

At this time, the controller 60 may initialize (interrupt) the dewatering process when the laundry-tangled degree output through the pre-learned ANN is the first step (class 1) (laundry is slightly tangled). This is because the UB value of 75 exceeds the allowable UB value of 50 associated with the first laundry-tangled degree (class 1). In this case, the controller 60 may restart the dewatering process from the beginning (or from a section after detecting the dewatered laundry amount) to perform the laundry balancing (laundry diffusion) process so as to untangle (evenly distribute) the laundry by rotating the washing tub at a low RPM, and to perform dewatering by rotating the washing tub at a high RPM when the UB value measured in the first section is 50 or smaller.

Accordingly, in the present invention, laundry balancing is properly performed even in the case of a low degree of laundry tangling. Thus, noise at a high RPM section may be reduced, and a possibility of occurrence of abnormal vibration may also be reduced.

Meanwhile, the controller 60 may continue the dewatering process when the laundry-tangled degree output through the pre-learned ANN is the second step (class 2) (laundry is severely tangled). This is because the UB value of 75 is lower than or equal to the allowable UB value of 100 associated with the second laundry-tangled degree (class 2). In this case, the controller 60 sets (changes) the allowable UB value to be higher to prevent interruption of the dewatering process from being frequently occurred, caused by the UB value exceeding the allowable UB value. Thus, a dewatering time may be reduced.

Like this, in the present invention, an optimized effect can be provided for both the laundry having a low degree of tangling and the laundry having a high degree of tangling by applying (or changing) the allowable UB value differently depending on the laundry-tangled degree even in the same laundry amount.

In the washing machine according to the present invention, a plurality of types of data is measured while the washing tub 4 rotates at specific rotational speed during the rinsing process, and the measured plurality of types of data is input into the pre-learned ANN to determine the laundry-tangled degree as an output value.

Thereafter, the washing machine may set the allowable UB value differently according to the laundry tangled degree. In the case of laundry having a low degree of tangling, the UB value is set to be small to perform an additional laundry balancing process so as to reduce noise at the high-speed dewatering section. And in the case of laundry having a high degree of tangling, the allowable UB value is set to be large to prevent frequent stopping of the dewatering process, which may result in the decreased dewatering time.

The controller 60 may detect the laundry-tangled degree using the pre-learned ANN when a preset condition is satisfied. The preset condition may include at least one of, for example, the completion of the rinsing stroke and the normal completion of laundry amount detection.

In other words, detecting the laundry-tangled degree using the pre-learned ANN (S320) may be performed, in response to at least one of the completion of the rinsing stroke and the normal completion of laundry amount (dewatered laundry amount) detection.

On the other hand, the controller 60 may not detect the laundry-tangled degree when the preset condition is not satisfied.

The case for unsatisfied preset condition (i.e., the condition that the detection of the laundry-tangled degree is not performed) may include every condition in which rinsing is not normally completed (Power off, IE, OE, LE, etc.), a condition in which detecting the laundry amount is not normally completed, a condition in which a second to a fourth tumbling motion during rinsing is not started or skipped without completing a preset ON time, a condition in which there is a pause in the final rinsing, a course that fails to obtain data as a rinsing time is over before the fourth tumbling motion is finished, a case where a rinsing tumbling motion is performed less than four times, a case where a predetermined number of input data is not completely input, and the like.

In this case, the controller 60 may determine whether to stop rotation of the washing tub 4 based on the allowable UB value (for example, related to a third step (class 3) in case the maximum step (class) of the laundry-tangled degree is the third step (class 3)) related to the highest step (class) of laundry-tangled degree.

Meanwhile, in the washing machine according to the present invention, when the laundry-tangled degree is incorrectly detected, for example, an actual laundry-tangled degree is the third step (class 3) (laundry is severely tangled), but the laundry-tangled degree output from the ANN is the first step (class 1) (laundry is slightly tangled), the allowable UB value is set to be small (low), which may result in frequent initialization (interruption) of the dewatering process. In this case, the dewatering time is extended.

When a predetermined time period (e.g., 300 seconds) has passed after entering the dewatering process (for example, after completing detection of the laundry amount), the controller 60 may apply the allowable UB value associated with the highest degree of tangled laundry in the UB table (that is, the highest allowable UB value applied to the highest laundry-tangled degree for the corresponding laundry amount, the largest allowable value for the corresponding laundry amount) to perform the dewatering process. This may prevent the dewatering time from being indefinitely extended.

The washing machine according to the present invention changes (sets) the allowable UB value to be small, which is a criterion for interrupting (initializing) the dewatering process (or a criterion for stopping rotation of the washing tub 4), to prevent the dewatering process from being performed at high-speed without performing the laundry balancing process. Thus, an occurrence rate of noise and abnormal vibration may be reduced.

In other words, in the washing machine according to the present invention, in the case of laundry having a low degree of tangling, the dewatering process may be performed in a UB-minimized state through the laundry balancing process by setting the allowable UB value to be small. Accordingly, noise and abnormal vibration may be reduced.

In addition, in the case of laundry having a high degree of tangling, even though the laundry balancing process is performed through interruption (initialization) of the dewatering process, laundry is not evenly loaded (distributed) due to a high degree of tangling. Accordingly, the number of cases for the UB value measured in the dewatering process exceeding the preset UB value is increased. Therefore, the number of dewatering interruption (initialization) cases is increased, resulting in a prolonged dewatering time.

However, in the washing machine according to the present invention, in the case of laundry having the high degree of tangling, the allowable UB value is set to be large so as to minimize the number of cases for the UB value exceeding the allowable UB value. Accordingly, the number of dewatering interruption (initialization) cases is reduced, resulting in a reduced dewatering time.

In this specification, the controller 60 initializes (interrupts) the dewatering process when the measured UB value exceeds the preset allowable UB value, but the present invention is not limited thereto.

The controller 60 may control the washing tub 4 to rotate (decelerate) the washing tub 4 at rotational speed (for example, 80 RPM or lower), at which laundry can fall without being attached to the washing tub so that the laundry balancing process is performed (or laundry is untangled).

In this specification, description of the controller 60 initializing (interrupting) the dewatering process may be understood that the controller 60 rotates (decelerates) the washing tub 4 at rotational speed (for example, 80 RPM or lower), at which laundry can fall without being attached to the washing tub according to product design or user settings.

The above description may be equally applied to a washing machine control method. The washing machine control method, for example, may be performed by the controller 60. According to an embodiment of the present invention, one or more of the following effects can be provided.

According to the present invention, one or more of the following effects can be provided.

First, according to the present invention, an AI powered washing machine capable of performing optimized dewatering by setting (changing) an allowable UB value, which is a criterion for interrupting (initializing) a dewatering process (stroke), so as to correspond to an allowable UB value related to a laundry amount and laundry-tangled degree. Second, the present invention can provide an optimized washing machine capable of reducing a dewatering time by changing an allowable UB value based on a laundry-tangled degree even in the same amount of laundry each time when a dewatering process is performed. Thus, in the case of laundry having a low degree of tangling, the allowable UB value is set to be small so as to reduce noise generated during dewatering, and in the case of laundry having a high degree of tangling, the allowable UB value is set to be large so as to reduce a dewatering time, and a method for controlling the same.

Third, the present invention can provide a washing machine capable of performing sophisticated dewatering control by setting an allowable UB value differently according to a laundry-tangled degree as well as a laundry amount by using a UB table classified into a plurality of laundry-tangled degrees according to each laundry amount, and a method for controlling the same.

The effects of the present invention are not limited to those effects mentioned above, and other effects not mentioned may be clearly understood by those skilled in the art from the description of the appended claims.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. The computer may include the processor or the controller. Therefore, it should also be understood that the above-described embodiments are not limited by any of the details of the foregoing description, unless otherwise specified, but rather should be construed broadly within its scope as defined in the appended

**Claims**

1.  A washing machine, comprising:

    a washing tub (4) configured to accommodate laundry therein and rotatably disposed;
    a motor (9) configured to rotate the washing tub (4); and
    a controller (60) configured to control the motor (9) to stop rotation of the washing tub (4) when an unbalance value, generated by the rotation of the washing tub (4) during a dewatering stroke, exceeds a preset allowable unbalance value,
    wherein the controller (60) is configured to determine a laundry amount and a laundry-tangled degree by using a plurality of types of data measured while rotating the washing tub (4) at a specific rotational speed before measuring the unbalance value, wherein the plurality of types of data include at least one of current rotational speed, an average value of the unbalance values measured at predetermined time intervals, a q-axis current, starting/holding currents, information of laundry- amount level, and a vibration value,
    **characterized in that**:

    the controller (60) is configured to set the preset allowable unbalance value to an allowable unbalance value associated with the determined laundry amount and laundry-tangled degree based on the determined laundry amount and laundry-tangled degree, and
    the controller (60) is configured to input the measured plurality of types of data as an input value of a pre-learned Artificial Neural Network, to output the laundry-tangled degree as a result value, wherein the controller (60) is configured to determine one of laundry-tangled degrees classified into a plurality of steps through the pre-learned Artificial Neural Network.

2.  The washing machine of claim 1, wherein the controller (60) is configured to differently apply the preset allowable unbalance value, which is a criterion for stopping the rotation of the washing tub (4) during the dewatering stroke, based on the determined laundry amount and laundry-tangled degree.

3.  The washing machine of claim 1 or 2, wherein the controller (60) is configured to measure the plurality of types of data while the washing tub (4) is rotated at the specific rotational speed so that the laundry is lifted up by a predetermined height and then dropped in a rinsing stroke performed before the dewatering stroke.

4.  The washing machine of any one of claims 1 to 3, wherein the controller (60) is configured to set the preset allowable unbalance value to a first value when the laundry-tangled degree is determined as a first step, and
set the preset allowable unbalance value to a second value, which is larger than the first value, when the laundry-tangled degree is determined as a second step, which is higher than the first step.

5. The washing machine of any one of claims 1 to 4, wherein the controller (60) is configured to set the preset allowable unbalance value based on an unbalance value table that includes information of an allowable unbalance value set for each laundry-tangled degree classified into a plurality of steps for each laundry amount.

6. The washing machine of claim 5, wherein the unbalance value table includes a plurality of laundry-tangled degrees classified for each laundry amount, and an allowable unbalance value is set in advance for each dewatering section according to the plurality of laundry-tangled degrees,

wherein the controller (60) is configured to determine an allowable unbalance value associated with a laundry amount and a laundry-tangled degree output through a pre-learned Artificial Neural Network, based on the unbalance value table, and
initializes the dewatering stroke when a unbalance value, generated in response to the rotation of the washing tub for each dewatering section, exceeds the allowable unbalance value associated with the determined laundry amount and laundry-tangled degree.

7. A method for controlling a washing machine, the method comprising:

measuring a plurality of types of data while rotating a washing tub (4) at a specific rotational speed before measuring an unbalance value;
determining a laundry amount and a laundry-tangled degree using the measured plurality of types of data, wherein the plurality of types of data include at least one of current rotational speed, an average value of the unbalance values measured at predetermined time intervals, a q-axis current, starting/holding currents, information of laundry- amount level, and a vibration value,
**characterized by**:

setting a preset allowable unbalance value, a criterion for stopping the rotation of the washing tub (4) in a dewatering stroke, to an allowable UB unbalance value associated with the determined laundry amount and laundry-tangled degree, based on the determined laundry-amount and laundry-tangled degree
wherein the determining step is configured to input the measured plurality of types of data as an input value of a pre-learned Artificial Neural Network to output the laundry-tangled degree as a result value, wherein the determining step is configured to determine one of laundry-tangled degrees classified into a plurality of steps through the pre-learned Artificial Neural Network.

8. The method of claim 7, wherein the setting step is configured to
differently apply the preset allowable unbalance value as the criterion for stopping the rotation of the washing tub (4) in the dewatering stroke, based on the determined laundry amount and laundry-tangled degree.

9. The method of claim 7 or 8, wherein the measuring step is configured to
measure the plurality of types of data while the washing tub (4) is rotated at the specific rotational speed so that the laundry is lifted up by a predetermined height and then dropped in a rinsing stroke performed before the dewatering stroke.

10. The method of any one of claims 7 to 9, wherein the setting step is configured to

set the preset allowable unbalance value to a first value when the laundry-tangled degree is determined as a first step, and
set the preset allowable unbalance value to a second value, which is larger than the first value, when the laundry-tangled degree is determined as a second step, which is higher than the first step.

11. The method of any one of claims 7 to 10, wherein the setting step is configured to set the preset allowable unbalance value based on an unbalance value table that includes information of an allowable unbalance value set for each laundry-tangled degree classified into a plurality of steps for each laundry amount.

12. The method of claim 11, wherein the unbalance value table includes a plurality of laundry-tangled degrees classified for each laundry amount, and an allowable unbalance value is set in advance for each dewatering section according to the plurality of laundry-tangled degrees.

13. The method of claim 12, wherein the setting step is configured to

determine an allowable unbalance value associated with a laundry amount and a laundry-tangled degree output through a pre-learned Artificial Neural Network, based on the unbalance value table, and
initialize the dewatering stroke when a unbalance value, generated in response to the rotation of the washing tub for each dewatering section, exceeds the allowable unbalance value associated with the determined laundry amount and laundry-tangled degree.

**Patentansprüche**

1. Waschmaschine, die aufweist:

einen Bottich (4), der konfiguriert ist, Wäsche aufzunehmen, und der drehbar angeordnet ist;
einen Motor (9), der konfiguriert ist, den Bottich (4) zu drehen; und
eine Steuerung (60), die konfiguriert ist, den Motor (9) zu steuern, die Drehung des Bottichs (4) zu stoppen, wenn ein Unwuchtwert, der durch die Drehung des Bottichs (4) während eines Entwässerungstakts erzeugt wird, einen voreingestellten zulässigen Unwuchtwert überschreitet,
wobei die Steuerung (60) konfiguriert ist, eine Wäschemenge und einen Wäscheverwicklungsgrad unter Verwendung mehrerer Datentypen zu bestimmen, die gemessen werden, während der Bottich (4) mit einer spezifischen Drehzahl gedreht wird,
bevor der Unwuchtwert gemessen wird, wobei die mehreren Datentypen mindestens eines, eine aktuelle Drehzahl, einen Durchschnittswert der in vorbestimmten Zeitintervallen gemessenen Unwuchtwerte, einen q-Achsenstrom, Start-/Halteströme, Informationen über den Wäschemengenpegel und/oder einen Vibrationswert enthalten,
**dadurch gekennzeichnet, dass**:

die Steuerung (60) konfiguriert ist, den voreingestellten zulässigen Unwuchtwert auf einen zulässigen Unwuchtwert einzustellen, der mit der bestimmten Wäschemenge und
dem Wäscheverwirrungsgrad basierend auf der bestimmten Wäschemenge und dem Wäscheverwirrungsgrad verbunden ist, und
die Steuerung (60) konfiguriert ist, die gemessenen mehreren Datentypen als einen Eingangswert eines vorgelernten künstlichen neuronalen Netzes einzugeben, um den Wäscheverwirrungsgrad als einen Ergebniswert auszugeben, wobei die Steuerung (60) konfiguriert ist, einen von Wäscheverwirrungsgraden, die in mehrere Stufen klassifiziert sind, durch das vorgelernte künstliche neuronale Netz zu bestimmen.

2. Waschmaschine nach Anspruch 1, wobei die Steuerung (60) konfiguriert ist, den voreingestellten zulässigen Unwuchtwert, der ein Kriterium für das Stoppen der Drehung des Bottichs (4) während des Entwässerungstakts ist, basierend auf der bestimmten Wäschemenge und dem Wäscheverwirrungsgrad unterschiedlich anzuwenden.

3. Waschmaschine nach Anspruch 1 oder 2, wobei die Steuerung (60) konfiguriert ist, die mehreren Datentypen zu messen, während der Bottich (4) mit der spezifischen Drehzahl gedreht wird, so dass in einem vor dem Entwässerungstakt durchgeführten Spültakt die Wäsche um eine vorbestimmte Höhe angehoben und dann fallen gelassen wird.

4. Waschmaschine nach einem der Ansprüche 1 bis 3, wobei die Steuerung (60) konfiguriert ist,

den voreingestellten zulässigen Unwuchtwert auf einen ersten Wert zu setzen, wenn der Wäscheverwirrungsgrad als eine erste Stufe bestimmt wird, und
den voreingestellten zulässigen Unwuchtwert auf einen zweiten Wert zu setzen, der größer als der erste Wert ist, wenn der Wäscheverwirrungsgrad als eine zweite Stufe bestimmt wird, die höher als die erste Stufe ist.

5. Waschmaschine nach einem der Ansprüche 1 bis 4, wobei die Steuerung (60) konfiguriert ist, den voreingestellten zulässigen Unwuchtwert basierend auf einer Unwuchtwerttabelle einzustellen, die Informationen über einen zulässigen Unwuchtwert enthält, der für jeden Wäscheverwirrungsgrad eingestellt ist, der in mehrere Stufen für jede Wäschemenge klassifiziert ist.

6. Waschmaschine nach Anspruch 5, wobei die Unwuchtwerttabelle mehrere Wäscheverwirrungsgrade enthält, die für jede Wäschemenge klassifiziert sind, und ein zulässiger Unwuchtwert im Voraus für jeden Entwässerungsabschnitt gemäß der Vielzahl von Wäscheverwirrungsgraden eingestellt wird,

wobei die Steuerung (60) konfiguriert ist, basierend auf der Unwuchtwerttabelle einen zulässigen Unwuchtwert zu bestimmen, der mit einer Wäschemenge und einer Wäscheverwirrungsgrad-Ausgabe verbunden ist, die durch ein vorgelerntes künstliches neuronales Netzwerk ausgegeben werden, und den Entwässerungstakt initialisiert, wenn ein Unwuchtwert, der als Reaktion auf die Drehung des Bottichs für jeden Entwässerungsabschnitt erzeugt wird, den zulässigen Unwuchtwert übersteigt, der mit der bestimmten Wäschemenge und dem Wäscheverwirrungsgrad verbunden ist.

7. Verfahren zum Steuern einer Waschmaschine, wobei das Verfahren aufweist:

Messen von mehreren Datentypen, während ein Bottich (4) mit einer spezifischen Drehzahl vor dem Messen eines Unwuchtwerts gedreht wird;
Bestimmen einer Wäschemenge und eines Wäscheverwirrungsgrades unter Verwendung der gemessenen mehreren Datentypen, wobei die mehreren Datentypen mindestens eines, eine aktuelle Drehzahl, einen Durchschnittswert der in vorbestimmten Zeitintervallen gemessenen Unwuchtwerte, einen q-Achsenstroms, Start-/Halteströme, Informationen über den Wäschemengenpegel und/oder einen Vibrationswert enthalten, **gekennzeichnet durch**:

Einstellen eines voreingestellten zulässigen Unwuchtwerts, eines Kriteriums für das Stoppen der Drehung des Bottichs (4) in einem Entwässerungstakt, auf einen zulässigen UB-Unwuchtwert, der mit der ermittelten Wäschemenge und dem Wäscheverwirrungsgrad verbunden ist, basierend auf der ermittelten Wäschemenge und dem Wäscheverwirrungsgrad,
wobei der Bestimmungsschritt konfiguriert ist, die gemessenen mehreren Datentypen als einen Eingabewert eines vorgelernten künstlichen neuronalen Netzes einzugeben, um den Wäscheverwirrungsgrad als einen Ergebniswert auszugeben, wobei der Bestimmungsschritt konfiguriert ist, einen von Wäscheverwirrungsgraden, die in mehrere Stufen klassifiziert sind, durch das vorgelernte künstliche neuronale Netz zu bestimmen.

8. Verfahren nach Anspruch 7, wobei der Einstellschritt konfiguriert ist:
den voreingestellten zulässigen Unwuchtwert als das Kriterium für das Stoppen der Drehung des Bottichs (4) im Entwässerungstakt, basierend auf der bestimmten Wäschemenge und dem Wäscheverwirrungsgrad unterschiedlich anzuwenden.

9. Verfahren nach Anspruch 7 oder 8, wobei der Messschritt konfiguriert ist:
die mehreren Datentypen zu messen, während der Bottich (4) mit der spezifischen Drehzahl gedreht wird, so dass in einem vor dem Entwässerungstakt durchgeführten Spültakt die Wäsche um eine vorbestimmte Höhe angehoben und dann fallen gelassen wird.

10. Verfahren nach einem der Ansprüche 7 bis 9, wobei der Einstellschritt konfiguriert ist:

den voreingestellten zulässigen Unwuchtwert auf einen ersten Wert einzustellen, wenn der Wäscheverwirrungsgrad als eine erste Stufe bestimmt wird, und
den voreingestellten zulässigen Unwuchtwert auf einen zweiten Wert einzustellen, der größer als der erste Wert ist, wenn der Wäscheverwirrungsgrad als eine zweite Stufe bestimmt wird, der höher als die erste Stufe ist.

11. Verfahren nach einem der Ansprüche 7 bis 10, wobei der Einstellschritt konfiguriert ist, den voreingestellten zulässigen Unwuchtwert basierend auf einer Unwuchtwerttabelle einzustellen, die Informationen über einen zulässigen Unwuchtwert enthält, der für jeden Wäscheverwirrungsgrad eingestellt ist, der in mehrere Stufen für jede Wäschemenge klassifiziert ist.

12. Verfahren nach Anspruch 11, wobei die Unwuchtwerttabelle mehrere Wäscheverwirrungsgrade enthält, die für jede Wäschemenge klassifiziert sind, und ein zulässiger Unwuchtwert im Voraus für jeden Entwässerungsabschnitt gemäß den mehreren Wäscheverwirrungsgraden eingestellt wird.

**13.** Verfahren nach Anspruch 12, wobei der Einstellschritt konfiguriert ist:

basierend auf der Unwuchtwerttabelle einen zulässigen Unwuchtwert zu bestimmen, der mit einer Wäschemenge und einer Wäscheverwirrungsgrad-Ausgabe verbunden ist, die durch ein vorgelerntes künstliches neuronales Netzwerk ausgegeben werden, und
den Entwässerungstakt zu initialisieren, wenn ein Unwuchtwert, der als Reaktion auf die Drehung des Bottichs für jeden Entwässerungsabschnitt erzeugt wird, den zulässigen Unwuchtwert überschreitet, der mit der bestimmten Wäschemenge und dem Wäscheverwirrungsgrad verbunden ist.

## Revendications

**1.** Machine à laver, comprenant :

une cuve de lavage (4) prévue pour recevoir du linge et montée de manière rotative ;
un moteur (9) prévu pour faire tourner la cuve de lavage (4) ; et
un contrôleur (60) prévu pour commander le moteur (9) afin d'arrêter la rotation de la cuve de lavage (4) lorsqu'une valeur de balourd, générée par la rotation de la cuve de lavage (4) au cours d'un cycle d'essorage, dépasse une valeur de balourd admissible prédéfinie,
où le contrôleur (60) est prévu pour déterminer une quantité de linge et un degré d'enchevêtrement du linge au moyen d'une pluralité de types de données mesurées pendant la rotation de la cuve de lavage (4) à une vitesse de rotation spécifique avant mesure de la valeur de balourd, ladite pluralité de types de données comprenant au moins l'un des éléments suivants : une vitesse de rotation actuelle, une moyenne des valeurs de balourd mesurées à intervalles temporels prédéfinis, un courant d'axe q, des courants de démarrage/de maintien, des informations sur le niveau de quantité de linge, et une valeur de vibration,
**caractérisée en ce que** :

le contrôleur (60) est prévu pour régler la valeur de balourd admissible prédéfinie à une valeur de balourd admissible associée à la quantité de linge et au degré d'enchevêtrement du linge déterminés en fonction de la quantité de linge et du degré d'enchevêtrement du linge déterminés, et
le contrôleur (60) est prévu pour entrer la pluralité de types de données mesurées en tant que valeur d'entrée d'un réseau neuronal artificiel pré-appris afin de sortir le degré d'enchevêtrement du linge en tant que valeur résultante, le contrôleur (60) étant prévu pour déterminer un des degrés d'enchevêtrement du linge classé en une pluralité d'échelons par l'intermédiaire du réseau neuronal artificiel pré-appris.

**2.** Machine à laver selon la revendication 1, où le contrôleur (60) est prévu pour appliquer différemment la valeur de balourd admissible prédéfinie, laquelle est un critère d'arrêt de la rotation de la cuve de lavage (4) pendant le cycle d'essorage, sur la base de la quantité de linge et du degré d'enchevêtrement du linge déterminés.

**3.** Machine à laver selon la revendication 1 ou la revendication 2, où le contrôleur (60) est prévu pour mesurer la pluralité de types de données pendant que la cuve de lavage (4) tourne à la vitesse de rotation spécifique afin que le linge soit soulevé à une hauteur prédéfinie puis relâché lors d'un cycle de rinçage effectué avant le cycle d'essorage.

**4.** Machine à laver selon l'une des revendications 1 à 3, où le contrôleur (60) est prévu pour fixer la valeur prédéfinie du balourd admissible à une première valeur lorsque le degré d'enchevêtrement du linge est déterminé en tant que premier échelon, et
fixer la valeur de balourd admissible prédéfinie à une deuxième valeur, supérieure à la première valeur, lorsque le degré d'enchevêtrement du linge est déterminé en tant que deuxième échelon, supérieur au premier échelon.

**5.** Machine à laver selon l'une des revendications 1 à 4, où le contrôleur (60) est prévu pour définir la valeur de balourd admissible prédéfinie sur la base d'un tableau de valeurs de balourd comprenant des informations sur une valeur de balourd admissible définie pour chaque degré d'enchevêtrement du linge classé en une pluralité d'échelons pour chaque quantité de linge.

**6.** Machine à laver selon la revendication 5, où le tableau des valeurs de balourd comprend une pluralité de degrés d'enchevêtrement du linge classés pour chaque quantité de linge, et où une valeur de balourd admissible est fixée à l'avance pour chaque section d'essorage en fonction de la pluralité de degrés d'enchevêtrement du linge,

où le contrôleur (60) est prévu pour déterminer une valeur de balourd admissible associée à une quantité de linge et à une sortie de degré d'enchevêtrement du linge par l'intermédiaire d'un réseau neuronal artificiel pré-appris, sur la base du tableau des valeurs de balourd, et
initialiser le cycle d'essorage lorsqu'une valeur de balourd, générée en réaction à la rotation de la cuve de lavage pour chaque section d'essorage, dépasse la valeur de balourd admissible associée à la quantité de linge et au degré d'enchevêtrement du linge déterminés.

7. Procédé de commande d'une machine à laver, ledit procédé comprenant :

la mesure d'une pluralité de types de données pendant la rotation d'une cuve de lavage (4) à une vitesse de rotation spécifique avant la mesure d'une valeur de balourd ;
la détermination d'une quantité de linge et d'un degré d'enchevêtrement du linge au moyen de la pluralité de types de données mesurées, la pluralité de types de données comprenant au moins l'un des éléments suivants : une vitesse de rotation actuelle, une moyenne des valeurs de balourd mesurées à intervalles temporels prédéfinis, un courant d'axe q, des courants de démarrage/de maintien, des informations sur le niveau de quantité de linge, et une valeur de vibration,
**caractérisé par** :

le réglage d'une valeur de balourd admissible prédéfinie, laquelle est un critère d'arrêt de la rotation de la cuve de lavage (4) pendant le cycle d'essorage, à une valeur de balourd UB admissible associée à la quantité de linge déterminée et au degré d'enchevêtrement du linge, sur la base de la quantité de linge et du degré d'enchevêtrement du linge déterminés,
où l'étape de détermination est prévue pour entrer la pluralité de types de données mesurées en tant que valeur d'entrée d'un réseau neuronal artificiel pré-appris afin de sortir le degré d'enchevêtrement du linge en tant que valeur résultante, l'étape de détermination étant prévue pour déterminer un des degrés d'enchevêtrement du linge classés en une pluralité d'échelons par l'intermédiaire du réseau neuronal artificiel pré-appris.

8. Procédé selon la revendication 7, où l'étape de réglage est prévue pour
appliquer différemment la valeur de balourd admissible prédéfinie en tant que critère d'arrêt de la rotation de la cuve de lavage (4) pendant le cycle d'essorage, sur la base de la quantité de linge et du degré d'enchevêtrement du linge déterminés.

9. Procédé selon la revendication 7 ou la revendication 8, où l'étape de mesure est prévue pour
mesurer la pluralité de types de données pendant que la cuve de lavage (4) tourne à la vitesse de rotation spécifique afin que le linge soit soulevé à une hauteur prédéfinie puis relâché lors d'un cycle de rinçage effectué avant le cycle d'essorage.

10. Procédé selon l'une des revendications 7 à 9, où l'étape de réglage est prévue pour

fixer la valeur prédéfinie du balourd admissible à une première valeur lorsque le degré d'enchevêtrement du linge est déterminé en tant que premier échelon, et
fixer la valeur de balourd admissible prédéfinie à une deuxième valeur, supérieure à la première valeur, lorsque le degré d'enchevêtrement du linge est déterminé en tant que deuxième échelon, supérieur au premier échelon.

11. Procédé selon l'une des revendications 7 à 10, où l'étape de réglage est prévue pour régler la valeur de balourd admissible prédéfinie sur la base d'un tableau de valeurs de balourd comprenant des informations sur une valeur de balourd admissible définie pour chaque degré d'enchevêtrement du linge classé en une pluralité d'échelons pour chaque quantité de linge.

12. Procédé selon la revendication 11, où le tableau des valeurs de balourd comprend une pluralité de degrés d'enchevêtrement du linge classés pour chaque quantité de linge, et où une valeur de balourd admissible est fixée à l'avance pour chaque section d'essorage en fonction de la pluralité de degrés d'enchevêtrement du linge.

13. Procédé selon la revendication 12, où l'étape de réglage est prévue pour

déterminer une valeur de balourd admissible associée à une quantité de linge et à une sortie de degré d'enchevêtrement du linge par l'intermédiaire d'un réseau neuronal artificiel pré-appris, sur la base du tableau des valeurs de balourd, et

initialiser le cycle d'essorage lorsqu'une valeur de balourd, générée en réaction à la rotation de la cuve de lavage pour chaque section d'essorage, dépasse la valeur de balourd admissible associée à la quantité de linge et au degré d'enchevêtrement du linge déterminés.

# FIG. 1

# FIG. 2

# FIG. 3

START

MEASURE A PLURALITY OF TYPES OF DATA WHILE ROTATING WASHING TUB AT SPECIFIC RPM BEFORE MEASURING UB VALUE — S310

DETERMINE LAUNDRY AMOUNT AND LAUNDRY-TANGLED DEGREE USINGMEASURED PLURALITY OF TYPES OF DATA — S320

SET PRESET ALLOWABLE UB VALUE,CRITERION FOR STOPPING ROTATION OF WASHING TUB IN DEWATERING PROCESS, TO ALLOWABLE UB VALUE ASSOCIATED WITH DETERMINED LAUNDRY AMOUNT AND LAUNDRY-TANGLED DEGREE BASED ON DETERMINED LAUNDRY AMOUNT AND LAUNDRY-TANGLED DEGREE — S330

END

# FIG. 4

S402 — LAUNDRY-TANGLED DEGREE IS FIRST STEP LOW DEGREE OF TANGLING? — YES → SET ALLOWABLE UB VALUE TO FIRST VALUE — S404

NO

S406 — SET ALLOWABLE UB VALUE TO SECOND VALUE LARGER THAN FIRST VALUE? — YES → SET ALLOWABLE UB VALUE TO SECOND VALUE LARGER THAN FIRST VALUE — S408

NO

S410 — INCREASE ALLOWABLE UB VALUE AS LAUNDRY-TANGLED DEGREE IS HIGHER

# FIG. 5

# FIG. 6

# FIG. 7

(a)

[FIXED UB TABLE]

| LAUNDRY AMOUNT | DEWATERING SECTIONS | | | | | | |
|---|---|---|---|---|---|---|---|
| | 1st SECTION | 2nd SECTION | 3rd SECTION | 4th SECTION | 5th SECTION | ... | Nth SECTION |
| FOURTH LEVEL (Lv.4) | a | b | c | d | e | ... | f |

(b)

[ACTIVE UB TABLE]

| LAUNDRY AMOUNT | LAUNDRY -TANGLED DEGREE | DEWATERING SECTIONS | | | | | | |
|---|---|---|---|---|---|---|---|---|
| | | 1st SECTION | 2nd SECTION | 3rd SECTION | 4th SECTION | 5th SECTION | ... | Nth SECTION |
| FOURTH LEVEL (Lv.4) | FIRST STEP (class 1) | a0 | b0 | c0 | d0 | e0 | ... | f0 |
| | SECOND STEP (class 2) | a1 | b1 | c1 | d1 | e1 | ... | f1 |

**EP 3 690 101 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 19940008628
- US 5293760 A
- EP 2470709 A0